# EUROPEAN PATENT SPECIFICATION

(11) **EP 4 066 679 B1**
(45) Date of publication and mention of the grant of the patent: **26.02.2025**
(21) Application number: 21177889.9
(22) Date of filing: 07.06.2021
(51) Int. Cl.: A45C 11/00, H04B 1/3888, A45C 13/00

(54) **A WATERPROOF SHADING BAG**
WASSERDICHTER SCHATTIERUNGSBEUTEL
SAC D'OMBRAGE IMPERMÉABLE À L'EAU

(30) Priority: 29.03.2021 CN 202120630674 U
(43) Date of publication of application: 05.10.2022
(73) Proprietor: Fang, Songke, Donglong Huilai County, Guangdong 515226 (CN)
(72) Inventor: Fang, Songke, Donglong Huilai County, Guangdong 515226 (CN)
(74) Representative: Diaz Nunez, Joaquin

(56) References cited:
- CN-A- 111 907 627
- CN-A- 112 208 687
- CN-U- 210 581 410
- DE-U1- 202013 006 175

## Description

### Cross-Reference to Related Applications

The instant application claims priority to Chinese Patent Application 202120630674.5, filed on 03/29/2021.

### Field of the Disclosure

The present disclosure relates to the technical field of sports accessories, and in particular to a waterproof shading bag.

### Background of the Disclosure

Waterproof sport devices currently offered on the market are characterized by single functions (i.e., have a single purpose), small capacity and cannot carry many things during exercise. Besides, general waterproof sport devices are only equipped with a lanyard and cannot be firmly fixed on sports equipment.

CN 112 208 687 A discloses a bag for no specific mobile devices made of elastic material composites (EVA). The bag comprises a packaging body with hook hair arranged on the back to fix the bag on a bike. The packaging body is cove-grooved to arrange items in it. The bag also has a bag cover with a transparent film where the mobile device can be arranged below. To hold the mobile device in position under the transparent film, first and second fixing pieces are arranged inside the bag cover. The fixing pieces can be attached and detached. The first and second fixing pieces may comprise bumpers, to prevent the mobile device from items stored inside the bag body. To enhance the protection of the mobile device, a partition plate may be arranged between the fixing pieces and the mobile device. The bag cover and packaging body are connected by a zipper to open the bag.

### Summary of the Disclosure

The present disclosure proposes a waterproof shading bag according to claim 1 to solve the problems existing in the prior art.

To solve the above technical problems, the present disclosure adopts the following technical scheme:
The present disclosure proposes a waterproof shading bag, comprising an upper shell, a lower shell, a zipper, a touch film, and a waterproof partition frame. The upper shell is connected to the lower shell by the zipper. An extension end is arranged at an upper edge of the lower shell. A drainage groove is arranged between the extension end and the zipper. A drain hole is arranged below the drainage groove. The touch film is arranged in a middle of the upper shell. A storage space is arranged in the lower shell. The waterproof partition frame is arranged at an inner end of the lower shell. Hook & loop straps are arranged at a bottom of the lower shell.

In a preferred embodiment, a hook & loop element is arranged at a bottom of the touch film.

In a preferred embodiment, a waterproof wrapping layer is arranged outside the zipper.

In a preferred embodiment, a top of the lower shell has a slope.

In a preferred embodiment, a U-shaped groove is arranged at the bottom of the lower shell.

In a preferred embodiment, a waterproof layer is arranged between the zipper and the waterproof partition frame.

The present disclosure has the following beneficial effects. A waterproof shading bag, comprising an upper shell, a lower shell, a zipper, a touch film, and a waterproof partition frame. The upper shell is connected to the lower shell by the zipper. An extension end is arranged at the upper edge of the lower shell. A drainage groove is arranged between the extension end and the zipper. A drain hole is arranged below the drainage groove. The touch film is arranged in the middle of the upper shell. A storage space is arranged in the lower shell. The waterproof partition frame is arranged at the inner end of the lower shell. Hook & loop straps are arranged at the bottom of the lower shell, which enables the waterproof shading bag to be firmly fixed on sports equipment, enhances a waterproof function of the waterproof shading bag, and increases storage space at the inner end so that users can place their exercise necessities for easy portability.

### Description of the Drawings

Figure 1 illustrates an overall structure diagram of the waterproof shading bag.

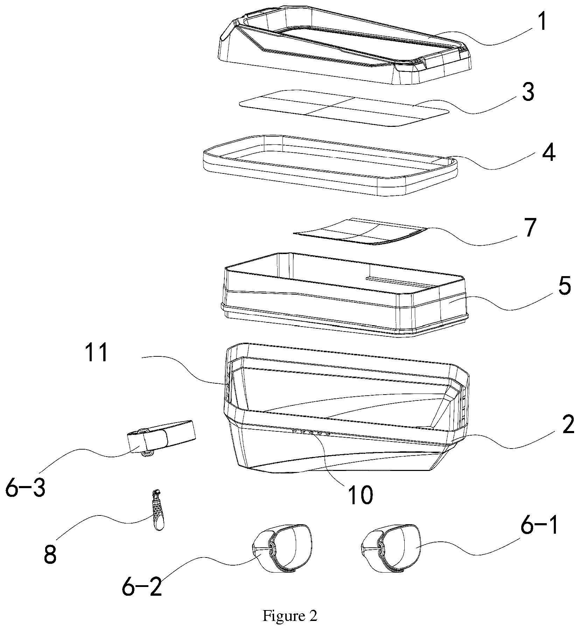

Figure 2 illustrates an exploded view of the waterproof shading bag.

Reference numerals in the drawings: 1- Upper shell; 2- Lower shell; 3- Touch film; 4- Waterproof wrapping layer; 5- Waterproof partition frame; 6- Hook & loop strap; 7- Hook & loop element; 8- Zipper; 10- Drain hole; 11- Drainage groove.

### Detailed Description of the Embodiment

For easy understanding by those skilled in the art, the present disclosure will be further described with reference to the embodiment and the accompanying drawings. The content mentioned in the embodiment should not be construed as limiting the present disclosure. The present disclosure will be described in detail with reference to the accompanying drawings.

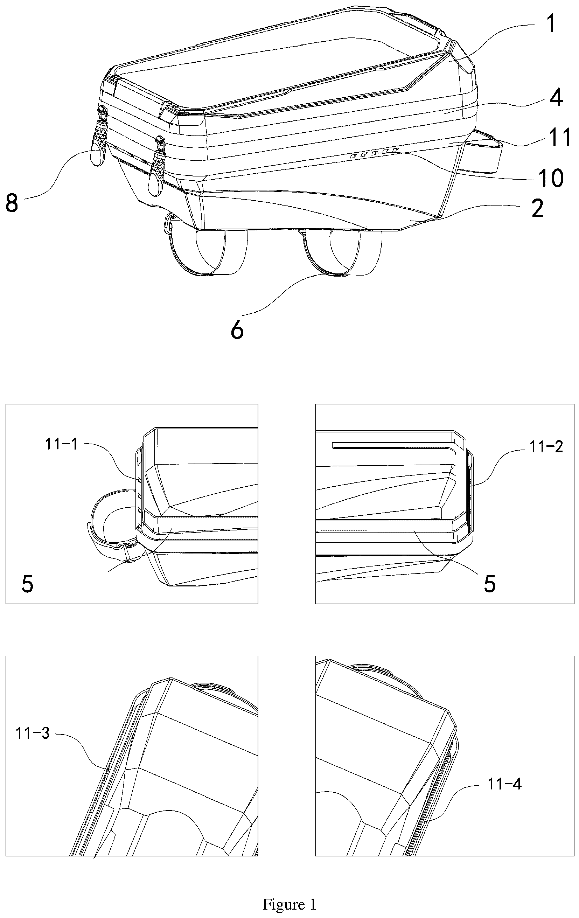

As shown in Figure 1, the present disclosure proposes a waterproof shading bag, comprising an upper shell (1), a lower shell (2), a zipper (8), a touch film (3), and a waterproof partition frame (5). The upper shell (1) is connected to the lower shell (2) by the zipper (8). An extension end is arranged at an upper edge of the lower shell (2). A drainage groove (11) is arranged between the extension end and the zipper (8). A drain hole (10) is arranged below the drainage groove (11). The touch film (3) is arranged in a middle of the upper shell (1). A storage space is arranged in the lower shell (2). The waterproof partition frame (5) is arranged at an inner end of the lower shell (2). Hook & loop straps (6) are arranged at a bottom of the lower shell (2).

In this embodiment, a hook & loop element (7) (e.g., a hook & loop pad) is arranged at a bottom of the touch film (3) and can be used to fix (e.g., secure) a mobile phone, making the mobile phone difficult to move.

In this embodiment, a waterproof wrapping layer (4) is arranged outside the zipper (8), which can effectively prevent water from entering and achieve a waterproofing effect.

In this embodiment, a top of the lower shell (2) has a slope, which enables water to flow in one direction and be discharged more quickly.

In this embodiment, a U-shaped groove is arranged at the bottom of the lower shell (2), which works with the hook & loop straps (6) to enable the waterproof shading bag to be fixed to sports equipment.

In this embodiment, a waterproof layer is arranged between the zipper (8) and the waterproof partition frame (5) to achieve secondary waterproofing.

The embodiment described above is only the preferred embodiment of the present disclosure and is not to be construed as limiting the present disclosure in any form. Although the present disclosure has been described with respect to the preferred embodiment above, it is understood that the preferred embodiment is not used to limit the present disclosure. Any person skilled in the art is expected to make some changes thereto or modifications to generate equivalent embodiments with some changes based on the technical content disclosed above without departing from the scope of the present disclosure as defined by the appended claims.

However, any simple modifications, equivalent changes, and modifications made to the above embodiment according to the present disclosure without departing from the content of the technical solution of the present disclosure are within the scope of the present disclosure as long as these fall within the scope of the appended claims.

## Claims

1. A waterproof shading bag, comprising:
an upper shell (1),
a lower shell (2),
a zipper (8),
a touch film (3), and
a waterproof partition frame (5), wherein:
the upper shell (1) is connected to the lower shell (2) by the zipper (8),
an extension end is arranged at an upper edge of the lower shell (2),
a drainage groove (11) is arranged between the extension end and the zipper (8),
a drain hole (10) is arranged below the drainage groove (11),
the touch film (3) is arranged in a middle of the upper shell (1),
a storage space is arranged in the lower shell (2),
the waterproof partition frame (5) is arranged at an inner end of the lower shell (2), and
hook & loop straps (6) are arranged at a bottom of the lower shell (2).

2. The waterproof shading bag according to claim 1, wherein a hook & loop element (7) is arranged at a bottom of the touch film.

3. The waterproof shading bag according to claim 1, wherein a waterproof wrapping layer (4) is arranged outside the zipper (8).

4. The waterproof shading bag according to claim 1, wherein a top of the lower shell (2) has a slope.

5. The waterproof shading bag according to claim 1, wherein a U-shaped groove is arranged at the bottom of the lower shell (2).

6. The waterproof shading bag according to claim 1, wherein a waterproof layer is arranged between the zipper and the waterproof partition frame.

## Patentansprüche

1. Ein wasserdichter Schattierungsbeutel, umfassend:
eine Oberschale,
eine Unterschale,
einen Reißverschluss,
eine Touchfolie und
einen wasserdichten Trennrahmen, wobei:
die Oberschale durch den Reißverschluss mit der Unterschale verbunden ist,
ein Verlängerungsende an einer oberen Kante der Unterschale angeordnet ist,
eine Abflussrinne zwischen dem Verlängerungsende und dem Reißverschluss angeordnet ist,
ein Abflussloch unter der Abflussrinne angeordnet ist,
die Touchfolie in einer Mitte der Oberschale angeordnet ist,
ein Stauraum in der Unterschale angeordnet ist,
der wasserdichte Trennrahmen an einem inneren Ende der Unterschale angeordnet ist und
Klettbänder an einer Unterseite der Unterschale angeordnet sind.

2. Der wasserdichte Schattierungsbeutel nach Anspruch 1, wobei ein Klettelement an einer Unterseite der Touchfolie angeordnet ist.

3. Der wasserdichte Schattierungsbeutel nach Anspruch 1, wobei eine wasserdichte Umhüllungsschicht außerhalb des Reißverschlusses angeordnet ist.

4. Der wasserdichte Schattierungsbeutel nach Anspruch 1, wobei eine Oberseite der Unterschale eine Neigung aufweist.

5. Der wasserdichte Schattierungsbeutel nach Anspruch 1, wobei an der Unterseite der Unterschale eine U-förmige Nut angeordnet ist.

6. Der wasserdichte Schattierungsbeutel nach Anspruch 1, wobei zwischen dem Reißverschluss und dem wasserdichten Trennrahmen eine wasserdichte Schicht angeordnet ist.

## Revendications

1. Sac d'ombrage imperméable à l'eau, comprenant :
une coque supérieure,
une coque inférieure,
une fermeture à glissière,
un film tactile et
un cadre de séparation imperméable, dans lequel :
la coque supérieure est reliée à la coque inférieure par la fermeture à glissière,
une extrémité d'extension est disposée au niveau d'un bord supérieur de la coque inférieure,
une rainure de drainage est disposée entre l'extrémité d'extension et la fermeture à glissière,
un trou de drainage est disposé sous la rainure de drainage,
le film tactile est disposé au milieu de la coque supérieure,
un espace de stockage est disposé dans la coque inférieure,
le cadre de séparation imperméable est disposé à une extrémité intérieure de la coque inférieure, et
des sangles auto-agrippantes sont disposées au bas de la coque inférieure.

2. Sac d'ombrage imperméable à l'eau selon la revendication 1, dans lequel un élément auto-agrippant est disposé au bas du film tactile.

3. Sac d'ombrage imperméable à l'eau selon la revendication 1, dans lequel une couche d'enveloppement imperméable est disposée à l'extérieur de la fermeture à glissière.

4. Sac d'ombrage imperméable à l'eau selon la revendication 1, dans lequel une partie supérieure de la coque inférieure présente une pente.

5. Sac d'ombrage imperméable à l'eau selon la revendication 1, dans lequel une rainure en U est disposée au fond de la coque inférieure.

6. Sac d'ombrage imperméable à l'eau selon la revendication 1, dans lequel une couche imperméable est disposée entre la fermeture à glissière et le cadre de séparation étanche.
